# EUROPÄISCHE PATENTSCHRIFT

(11) **EP 3 614 096 B1**
(45) Veröffentlichungstag und Bekanntmachung des Hinweises auf die Patenterteilung: **30.06.2021**
(21) Anmeldenummer: 18190118.2
(22) Anmeldetag: 22.08.2018
(51) Int. Cl.: G01B 5/012, G01D 11/30, G01B 21/04, G01B 7/012, B25J 15/04, H01F 7/02

(54) **TASTSYSTEM**
FEELER SYSTEM
SYSTÈME PAR CONTACT

(43) Veröffentlichungstag der Anmeldung: 26.02.2020
(73) Patentinhaber: Dr. Johannes Heidenhain GmbH, 83301 Traunreut (DE)
(72) Erfinder: SCHOPF, Reinhold, 83308 Trostberg (DE); SCHROLL, Thomas, 83301 Traunreut (DE)

(56) Entgegenhaltungen:
- EP-A1- 0 551 165
- EP-A2- 0 269 789
- DE-A1-102009 031 323
- US-A- 5 678 944

## Beschreibung

Die Erfindung betrifft ein Tastsystem, welches ein Gehäuse und einen Sockel umfasst, gemäß dem Anspruch 1.

### GEBIET DER TECHNIK

Ein derartiges Tastsystem, insbesondere der Sockel, wird häufig dauerhaft auf einem Tisch einer Werkzeugmaschine befestigt und dient zur Vermessung eines Werkzeuges der Werkzeugmaschine. Während der Durchführung einer Prüfroutine wird das Werkzeug, welches beispielsweise in einer Spindel der Werkzeugmaschine eingespannt ist, gegen einen Antastteller des Tastsystems bewegt. Dabei kann das Werkzeug auch im rotierenden Zustand vermessen werden.

Sobald eine Berührung des Antasttellers durch das Werkzeug auftritt, wird ein Schaltsignal z. B. an eine Numerische Steuerung der Werkzeugmaschine gesendet. Da üblicherweise die Ist-Position des Werkzeugs beziehungsweise der Spindelachse durch Positionsmessgeräte der Werkzeugmaschine stets ermittelt wird, kann der aktuelle Ist-Radius des Werkzeugs errechnet werden. Gegebenenfalls können dann Korrekturen in der Numerischen Steuerung für die nachfolgenden Bearbeitungsprozesse berücksichtigt werden.

Damit das Schaltsignal sicher auch bei geringster Auslenkung erzeugt wird, ist im Tastsystem eine Messeinrichtung, etwa eine optische Messeinrichtung vorgesehen. Über einen Antaststift wird die Auslenkung des Antasttellers mechanisch zur Messeinrichtung übertragen.

### STAND DER TECHNIK

Aus dem Dokument EP 0 551 165 A1 sind verschiedene Möglichkeiten zur Lagerung eines Taststiftes innerhalb eines Gehäuses eines Tastkopfes bekannt.

Zudem sind aus der Offenlegungsschrift EP 0269 789 A2 mehrere Bauweisen zur Lagerung eines Taststiftes offenbart.

In der Patentschrift US 5678944 A sind biegeelastische Lagerelemente offenbart, die zusammen mit weiteren, konvexen Lagerelementen eine positionsgenaue Lageranordnung bilden.

In der DE 10 2009 031 323 A1 wird beispielsweise ein Tastsystem angegeben, bei dem Adaptermittel an einer Werkzeugmaschine angebracht werden. Ein Messtaster kann mit Magnetmitteln an den Adaptermitteln positioniert werden. Zur wiederholgenauen Positionierung wird dort vorgeschlagen, dass Positionierflächen halbkugelförmige Enden aufweisen sollen.

Eine derartige Anordnung weist jedoch Nachteile bezüglich der Positioniergenauigkeit auf.

### ZUSAMMENFASSUNG DER ERFINDUNG

Der Erfindung liegt unter anderem die Aufgabe zugrunde, ein Tastsystem zu schaffen, welches ein Gehäuse und einen Sockel aufweist, wobei das Gehäuse relativ zum Sockel mithilfe von Magneten reproduzierbar überaus positionier- beziehungsweise wiederholgenau zusammengefügt werden kann.

Diese Aufgabe wird erfindungsgemäß durch ein Tastsystem mit den Merkmalen des Anspruches 1 gelöst.

Demnach umfasst das Tastsystem ein Gehäuse und einen Sockel, wobei das Gehäuse eine erste Positionierfläche und der Sockel eine zweite Positionierfläche aufweisen. Weiterhin weist beziehungsweise weisen das Gehäuse und / oder der Sockel einen Magneten auf. Demgemäß entsteht ein Magnetfeld. Das Tastsystem ist so ausgebildet, dass die erste Positionierfläche der zweiten Positionierfläche in einer ersten Richtung versetzt gegenüberliegend anordenbar ist. In dieser Anordnung werden das Gehäuse und der Sockel durch die vom Magnetfeld erzeugten Kräfte zusammengehalten. Dabei sind: entweder
a) an der ersten Positionierfläche drei kegelige Körper angeordnet, deren Achsen parallel in der ersten Richtung orientiert sind und zudem sind an der zweiten Positionierfläche sechs zylindrische Körper angeordnet, deren Achsen orthogonal zur ersten Richtung orientiert sind, oder es sind
b) an der zweiten Positionierfläche drei kegelige Körper angeordnet, deren Achsen parallel in der ersten Richtung orientiert sind und es sind an der ersten Positionierfläche sechs zylindrische Körper angeordnet, deren Achsen orthogonal zur ersten Richtung orientiert sind.

Weiterhin sind die zylindrischen Körper in Kontakt mit den kegeligen Körpern bringbar, so dass die erste und zweite Positionierfläche relativ zueinander präzise und reproduzierbar beziehungsweise wiederholgenau zusammenfügbar sind.

Insbesondere sind in der Anordnung, in welcher die erste Positionierfläche der zweiten Positionierfläche in der ersten Richtung versetzt gegenüberliegend positioniert ist und das Gehäuse und der Sockel durch die vom Magnetfeld erzeugten Kräfte zusammengehalten werden, die zylindrischen Körper in Kontakt mit den kegeligen Körpern.

Unter dem Begriff kegeliger Körper ist im Folgenden ein Körper zu verstehen, der als Konus beziehungsweise Kegel oder Kegelstumpf ausgebildet ist. Insbesondere kann der Kegel als ein gerader Kreiskegel ausgebildet sein. Wichtig ist es, dass zumindest ein Teil der Oberfläche des kegeligen Körpers als Kreiskegelfläche ausgebildet ist, wobei diese Kreiskegelfläche mit den Oberflächen der zylindrischen Körper in Kontakt gebracht werden kann. Somit liegt jeweils eine Punktberührung zwischen den kegeligen Körpern und den zylindrischen Körpern vor. Als Achsen der kegeligen Körper können insbesondere die Symmetrieachsen der jeweiligen Kegelflächen verstanden werden.

Gemäß der Erfindung weist das Tastsystem einen Taststift auf, der relativ zum Gehäuse auslenkbar gelagert ist, wobei bei einer Auslenkung des Taststifts von einer Sensoreinheit ein elektrisches Signal auslösbar ist.

In weiterer Ausgestaltung der Erfindung sind die zylindrischen Körper als Stifte ausgestaltet.

Vorteilhaft sind die zylindrischen Körper entweder in Bohrungen des Gehäuses oder in Bohrungen des Sockels befestigt, wobei die zylindrischen Körper teilweise aus den Bohrungen herausragen können.

Gemäß einer weiteren Ausgestaltung der Erfindung sind die zylindrischen Körper paarweise parallel zueinander angeordnet, so dass also drei Paare von zylindrischen Körpern vorhanden sind, bei denen die zylindrischen Körper jeweils parallel zueinander angeordnet sind. Insbesondere weisen die sechs zylindrischen Körper jeweils in deren Längsrichtung eine Achse insbesondere eine Symmetrieachse auf, wobei die Achsen orthogonal zu einer ersten Richtung z orientiert sind.

Mit Vorteil sind die kegeligen Körper kegelstumpfförmig ausgestaltet.

In weiterer Ausgestaltung der Erfindung sind die kegeligen Körper insbesondere durch eine (Press-) Passung oder durch ein Gewinde in Bohrungen des Gehäuses oder in Bohrungen des Sockels befestigt.

Mit Vorteil weist das Gehäuse einen Magneten auf, wobei der Sockel zumindest teilweise aus einem magnetischen Material hergestellt ist.

Alternativ kann der Sockel einen Magneten aufweisen und das Gehäuse kann dann zumindest teilweise aus einem magnetischen Material hergestellt sein. Als magnetische Materialien kommen insbesondere ferromagnetische Materialien in Betracht beispielsweise Materialien, die einen vergleichsweise hohen Eisenanteil aufweisen.

Selbstverständlich können sowohl das Gehäuse als auch der Sockel einen Magneten aufweisen.

Gemäß einer vorteilhaften Bauweise weisen das Gehäuse ein erstes Mittel zur mechanischen Codierung auf und der Sockel ein zweites Mittel zur mechanischen Codierung, so dass das Gehäuse und der Sockel nur in einer definierten relativen Position zueinander zusammenfügbar sind. Insbesondere können das Gehäuse und der Sockel durch die mechanische Codierung nur in einer definierten Winkelstellung bezüglich der Längsachse zusammengefügt werden.

Vorteilhafte Ausbildungen der Erfindung entnimmt man den abhängigen Ansprüchen.

Weitere Einzelheiten und Vorteile des erfindungsgemäßen Tastsystems ergeben sich aus der nachfolgenden Beschreibung eines Ausführungsbeispiels.

### KURZE BESCHREIBUNG DER ZEICHNUNGEN

Es zeigen die
- Figur 1: eine perspektivische Ansicht eines Tastsystems umfassend ein Gehäuse und einen Sockel,

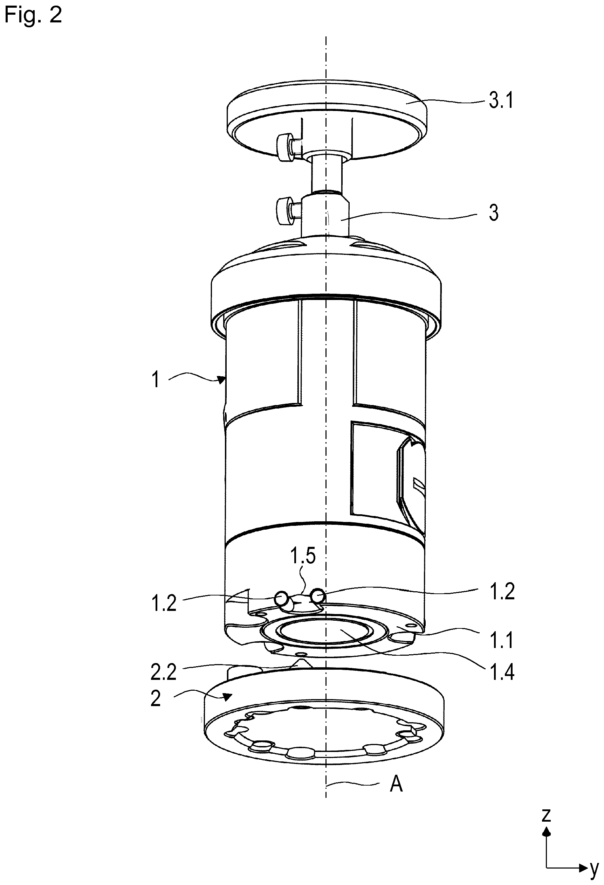

- Figur 2: eine weitere perspektivische Ansicht des Tastsystems,
- Figur 3: eine Ansicht auf das Gehäuse des Tastsystems von unten,
- Figur 4: eine perspektivische Ansicht des Sockels in einem Zustand während der Montage des Sockels,
- Figur 5: eine perspektivische Ansicht des Sockels,
- Figur 6: eine Draufsicht auf den Sockel des Tastsystems von oben,
- Figur 7: eine weitere perspektivische Ansicht des Tastsystems, in einem Zustand, in dem der Sockel und das Gehäuse zusammengefügt sind.

### BESCHREIBUNG DER AUSFÜHRUNGSFORMEN

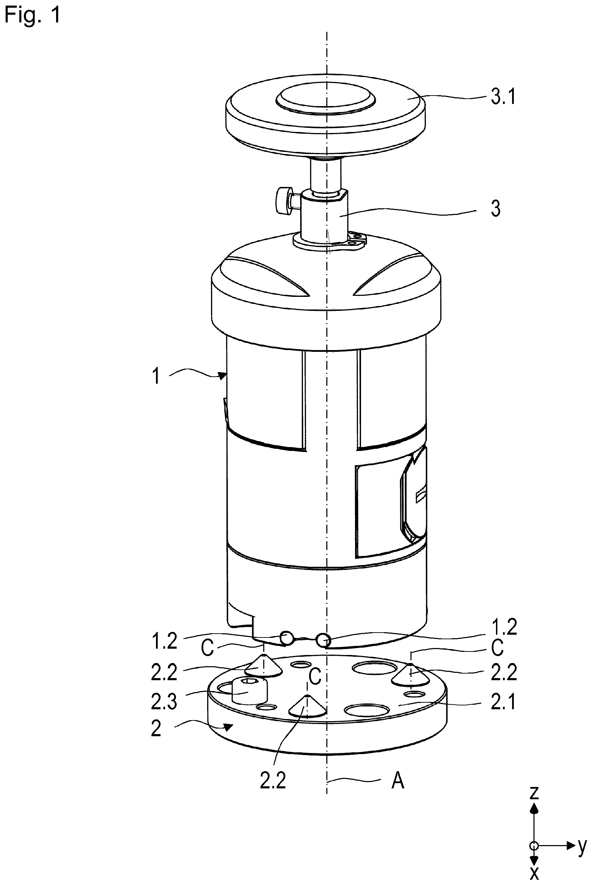

In der Figur 1 ist ein Tastsystem gezeigt, welches ein Gehäuse 1 und einen Sockel 2 umfasst.

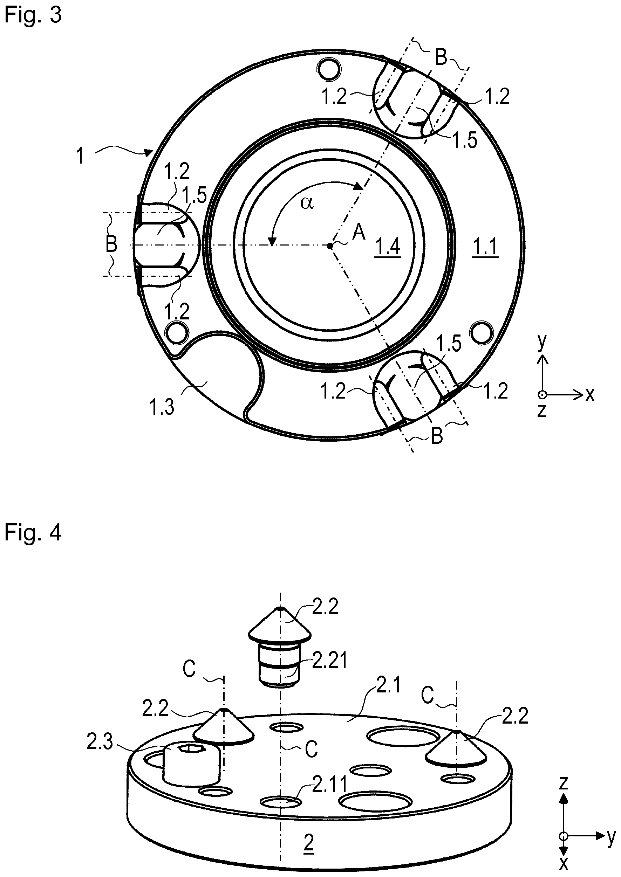

Aus dem Gehäuse 1, das eine Längsachse A aufweist, ragt ein Taststift 3, dessen Längsachse im Ruhezustand beziehungsweise in der Ruheposition mit der Längsachse A des Gehäuses 1 zusammenfällt. An einem Ende des Taststifts 3 ist ein Antastteller 3.1 befestigt. Am gegenüberliegenden Ende des Gehäuses 1 beziehungsweise an dessen Boden ist gemäß der Figur 3 eine erste Positionierfläche 1.1 vorgesehen. In diese sind Ausnehmungen 1.5 eingearbeitet. Weiterhin sind in dem Gehäuse 1 im Bereich der Ausnehmungen 1.5 Bohrungen vorgesehen, wobei in den Bohrungen jeweils ein zylindrischer Körper 1.2 befestigt ist. Demnach sind im Bereich der Ausnehmungen 1.5 je zwei zylindrische Körper 1.2, die hier als Stifte aus Hartmetall ausgebildet sind, montiert. Diese sind im vorgestellten Ausführungsbeispiel paarweise parallel zueinander angeordnet. Die sechs zylindrischen Körper 1.2 weisen jeweils in deren Längsrichtung eine Achse B (Symmetrieachse) auf. Die Achsen B der sechs zylindrischen Körper 1.2 sind orthogonal zu einer ersten Richtung z orientiert. Im vorgestellten Ausführungsbeispiel ist auch die Längsachse A des Gehäuses 1 in der ersten Richtung z ausgerichtet.

Linien, die mittig zwischen den Paaren der zylindrischen Körper 1.2 verlaufen, sind jeweils um den Winkel α = 120° in Umfangsrichtung versetzt angeordnet. Die Linien haben einen Schnittpunkt auf der Längsachse A des Gehäuses 1.

In der Mitte des Gehäuses 1 beziehungsweise der ersten Positionierfläche 1.1, ist ein Magnet 1.4, hier ein Permanentmagnet angeordnet, so dass die Längsachse A des Gehäuses 1 diesen schneidet.

Zudem weist die erste Positionierfläche 1.1 eine Aussparung auf, die als ein erstes Mittel 1.3 zur mechanischen Codierung dient, was unten näher erläutert wird.

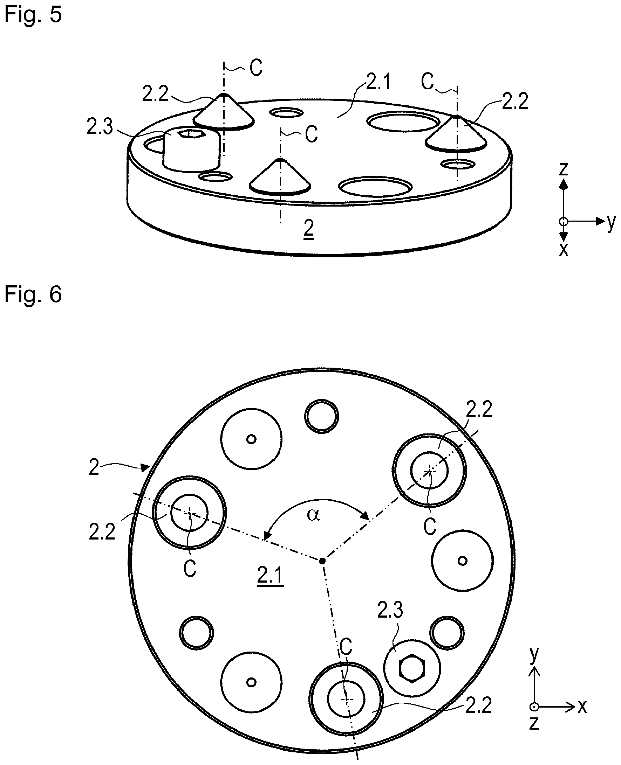

Der Sockel 2 des Tastsystems kann anhand der Figuren 4 bis 6 beschrieben werden. Der Sockel 2, der aus magnetischem Material besteht, weist eine zweite Positionierfläche 2.1 auf. An den kegeligen Körpern 2.2 sind gemäß der Figur 4, die eine Ansicht des Sockels 2 in einem Zustand während der Montage des Sockels 2 zeigt, Bolzen 2.21 angeformt. Die Bolzen 2.21 werden in Bohrungen 2.11 eingepresst. Zu diesem Zweck sind die Bolzen 2.21 und die Bohrung 2.11 maßlich so hergestellt, dass eine Übergangs- beziehungsweise Presspassung vorliegt.

Im vorgestellten Ausführungsbeispiel sind auf diese Weise mit dem Sockel 2 drei kegelige Körper 2.2 verbunden, so dass die kegeligen Körper 2.2 auf der Oberfläche beziehungsweise auf der zweiten Positionierfläche 2.1 anschlagen. Insbesondere sind die Grundflächen der kegeligen Körper 2.2 in Kontakt mit der zweiten Positionierfläche 2.1. Die kegeligen Körper 2.2 sind hier aus Hartmetall hergestellt. Die kegeligen Körper 2.2 weisen eine Geometrie auf, die einem Kegelstumpf beziehungsweise einem Kegelsegment entspricht, wobei naturgemäß jeder Kegelstumpf beziehungsweise jeder kegelige Körper 2.2 eine Achse C (Symmetrieachse der Kegelfläche) aufweist. Die Achsen C der drei kegeligen Körper 2.2 sind parallel zueinander angeordnet und zudem in der ersten Richtung z orientiert.

Außerdem ist in dem Sockel 2 eine Schraube eingedreht, die ein zweites Mittel 2.3 zur mechanischen Codierung darstellt und im Zusammenspiel mit dem oben genannten ersten Mittel 1.3 zur mechanischen Codierung dazu dient, dass das Gehäuse 1 und der Sockel 2 nur in einer definierten relativen Position insbesondere bezüglich der Längsachse A zueinander zusammenfügbar sind.

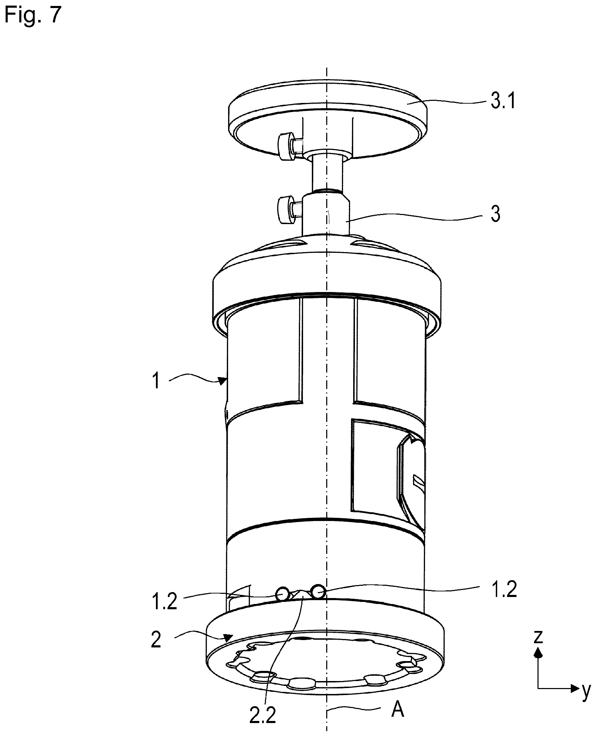

Der Sockel 2 kann auf einem Tisch einer Werkzeugmaschine befestigt werden. Sobald eine Messaufgabe ansteht, kann ein Bediener der Werkzeugmaschine das Gehäuse 1 mit dem Taststift 3 auf dem Sockel 2 platzieren. Bei diesem Vorgang taucht das zweite Mittel 2.3 zur mechanischen Codierung (hier der Kopf der Schraube) in das erste Mittel 1.3 zur mechanischen Codierung (hier die Aussparung) ein, wobei durch diese Bauweise stets die gleiche relative Winkelorientierung um die Längsachse A zwischen Sockel 2 und Gehäuse 1 gewährleistet werden kann. Durch den Magnet 1.4 entsteht also ein Magnetfeld, so dass bei der gegenüberliegenden Anordnung der ersten Positionierfläche 1.1 und der zweiten Positionierfläche 2.1 gemäß der Figur 7 das Gehäuse 1 und der Sockel 2 durch die vom Magnetfeld erzeugten Kräfte zusammengehalten werden. Mit anderen Worten wird durch die Anziehungskraft des Magneten 1.4 gegenüber dem magnetischen Sockel 2 das Gehäuse 1 am Sockel 2 fixiert. Zudem wird durch die Erfindung gewährleistet, dass das Gehäuse 1 in eine extrem genaue Position relativ zum Sockel 2 gleitet. In dieser Situation liegt die erste Positionierfläche 1.1 der zweiten Positionierfläche 2.1 in der ersten Richtung z versetzt gegenüber. Dabei berühren sich das Gehäuse 1 und der Sockel 2 an sechs Punkten.

Die Werkzeugmaschine verfügt über ein relativ zum Tisch bewegbares Werkzeug, welches beispielsweise in einer Spindel der Werkzeugmaschine eingespannt ist. Damit durch die Steuerung der Werkzeugmaschine die Ist-Größe des Werkzeugs berücksichtigt werden kann, wird dieses im rotierenden Zustand in regelmäßigen Abständen vermessen. So kann beispielsweise der Verschleiß des Werkzeugs bei der Ermittlung der zur Werkstückbearbeitung erforderlichen Position der Achse der Spindel kompensiert werden.

Der Taststift 3 ist zentral im Gehäuse 1 auslenkbar gelagert. Sobald der Antastteller 3.1 von dem sich annähernden zu vermessenden Werkzeug berührt wird, erzeugen Sensoren im Inneren des Gehäuses 1 entsprechende Signale. Die Signale werden weiterverarbeitet und bei Erfüllung vorgegebener Kriterien wird ein elektrisches Schaltsignal erzeugt. Das Schaltsignal wird schließlich an eine Elektronik, etwa in der Steuerung der Werkzeugmaschine, weitergeleitet, wo die Position des Werkzeugs bestimmt wird, und gleichzeitig die Maschine angehalten wird.

Wenn das Werkzeug aus der Anschlagposition heraus gefahren wird, kehrt der Taststift 3 wieder in die Ruheposition zurück.

Das Gehäuse 1 samt Taststift 3 kann beispielsweise nach erfolgter Messung aus dem Bearbeitungsraum der Werkzeugmaschine entnommen werden, während der Sockel 2 am Tisch der Werkzeugmaschine verbleibt. Durch die Erfindung kann später das Gehäuse 1 mit dem Taststift 3 auf dem Sockel 2 wieder genau platziert werden, insbesondere können die erste und die zweite Positionierfläche 1.1, 2.1 relativ zueinander präzise und reproduzierbar zusammengefügt werden.

## Patentansprüche

1. Tastsystem umfassend ein Gehäuse (1) mit einem Taststift (3) und einen Sockel (2), wobei
das Gehäuse (1) eine erste Positionierfläche (1.1) und der Sockel (2) eine zweite Positionierfläche (2.1) aufweisen, und
das Gehäuse (1) und / oder der Sockel (2) einen Magneten (1.4) aufweist, so dass ein Magnetfeld entsteht, wobei
der Taststift (3) relativ zum Gehäuse (1) auslenkbar gelagert ist, wobei bei einer Auslenkung des Taststifts (3) von einer Sensoreinheit ein elektrisches Signal auslösbar ist und
der Sockel (2) auf einem Tisch einer Werkzeugmaschine befestigbar und das Gehäuse (1) mit dem Taststift (3) auf dem Sockel (2) platzierbar ist, wobei
das Tastsystem so ausgebildet ist, dass die erste Positionierfläche (1.1) der zweiten Positionierfläche (2.1) in einer ersten Richtung (z) versetzt gegenüberliegend anordenbar ist, wobei in dieser Anordnung das Gehäuse (1) und der Sockel (2) durch die vom Magnetfeld erzeugten Kräfte zusammengehalten werden, wobei entweder
- an der ersten Positionierfläche (1.1) drei kegelige Körper (2.2) angeordnet sind, deren Achsen (C) parallel in der ersten Richtung (z) orientiert sind und
- an der zweiten Positionierfläche (2.1) sechs zylindrische Körper (1.2) angeordnet sind, deren Achsen (B) orthogonal zur ersten Richtung (z) orientiert sind,
oder
- an der zweiten Positionierfläche (2.1) drei kegelige Körper (2.2) angeordnet sind, deren Achsen (C) parallel in der ersten Richtung (z) orientiert sind und
- an der ersten Positionierfläche (1.1) sechs zylindrische Körper (1.2) angeordnet sind, deren Achsen (B) orthogonal zur ersten Richtung (z) orientiert sind, wobei
die zylindrischen Körper (1.2) in Kontakt mit den kegeligen Körpern (2.2) bringbar sind, so dass die erste und die zweite Positionierfläche (1.1, 2.1) relativ zueinander präzise und reproduzierbar zusammenfügbar sind und wobei das Tastsystem so ausgestaltet ist, dass nach erfolgter Messung das Gehäuse (1) samt Taststift (3) aus einem Bearbeitungsraum der Werkzeugmaschine entnehmbar ist, während der Sockel (2) am Tisch der Werkzeugmaschine verbleiben kann und später das Gehäuse (1) mit dem Taststift (3) auf dem Sockel wieder genau platziert werden kann.

2. Tastsystem gemäß einem der Ansprüche 1 oder 2, wobei die zylindrischen Körper (1.2) als Stifte ausgestaltet sind.

3. Tastsystem gemäß dem Anspruch 2, wobei die zylindrischen Körper (1.2) entweder in Bohrungen des Gehäuses (1) oder in Bohrungen des Sockels (2) befestigt sind.

4. Tastsystem gemäß einem der vorhergehenden Ansprüche, wobei die zylindrischen Körper (1.2) paarweise parallel zueinander angeordnet sind.

5. Tastsystem gemäß einem der vorhergehenden Ansprüche, wobei die kegeligen Körper (2.2) kegelstumpfförmig ausgestaltet sind.

6. Tastsystem gemäß einem der vorhergehenden Ansprüche, wobei die kegeligen Körper (2.2) in Bohrungen des Gehäuses (1) oder in Bohrungen (2.11) des Sockels (2) befestigt sind.

7. Tastsystem gemäß einem der vorhergehenden Ansprüche, wobei das Gehäuse (1) einen Magneten (1.4) aufweist und der Sockel (2) zumindest teilweise aus einem magnetischen Material hergestellt ist.

8. Tastsystem gemäß einem der vorhergehenden Ansprüche, wobei der Sockel (2) einen Magneten (1.4) aufweist und das Gehäuse (1) zumindest teilweise aus einem magnetischen Material hergestellt ist.

9. Tastsystem gemäß einem der vorhergehenden Ansprüche, wobei das Gehäuse (1) ein erstes Mittel (1.3) zur mechanischen Codierung aufweist, das als eine Aussparung ausgestaltet ist, und der Sockel (2) ein zweites Mittel (2.3) zur mechanischen Codierung aufweist, das als eine Schraube ausgestaltet ist, so dass das Gehäuse (1) und der Sockel (2) nur in einer definierten relativen Position zueinander zusammenfügbar sind.

## Claims

1. Probe system comprising a housing (1) with a stylus (3) and a base (2), wherein
the housing (1) has a first positioning face (1.1) and the base (2) has a second positioning face (2.1), and the housing (1) and/or the base (2) has a magnet (1.4) such that a magnetic field is produced, wherein
the stylus (3) is mounted in a deflectable manner relative to the housing (1), wherein, upon deflection of the stylus (3), an electrical signal is able to be trigged by a sensor unit and
the base (2) is able to be fastened to a table of a machine tool and the housing (1) with the stylus (3) is able to be placed on the base (2), wherein
the probe system is configured such that the first positioning face (1.1) is able to be arranged opposite the second positioning face (2.1) in a manner offset in a first direction (z), wherein, in this arrangement, the housing (1) and the base (2) are held together by the forces generated by the magnetic field, wherein
either
- three conical bodies (2.2) are arranged on the first positioning face (1.1), the axes (C) of which are oriented in a parallel manner in the first direction (z) and
- six cylindrical bodies (1.2) are arranged on the second positioning face (2.1), the axes (B) of which are oriented orthogonally to the first direction (z),
or
- three conical bodies (2.2) are arranged on the second positioning face (2.1), the axes (C) of which are oriented in a parallel manner in the first direction (z) and
- six cylindrical bodies (1.2) are arranged on the first positioning face (1.1), the axes (B) of which are oriented orthogonally to the first direction (z), wherein the cylindrical bodies (1.2) are able to be brought into contact with the conical bodies (2.2) such that the first and the second positioning face (1.1, 2.1) are able to be assembled relative to one another in a precise and reproducible manner and wherein the probe system is configured such that, after a measurement has been carried out, the housing (1) together with the stylus (3) is removable from a machining space of the machine tool while the base (2) can remain on the table of the machine tool and subsequently the housing (1) with the stylus (3) can be placed back on the base precisely.

2. Probe system according to either of Claims 1 and 2, wherein the cylindrical bodies (1.2) are configured as pins.

3. Probe system according to Claim 2, wherein the cylindrical bodies (1.2) are fastened either in bores in the housing (1) or in bores in the base (2).

4. Probe system according to one of the preceding claims, wherein the cylindrical bodies (1.2) are arranged parallel to one another in pairs.

5. Probe system according to one of the preceding claims, wherein the conical bodies (2.2) are configured in a frustoconical manner.

6. Probe system according to one of the preceding claims, wherein the conical bodies (2.2) are fastened in bores in the housing (1) or in bores (2.11) in the base (2) .

7. Probe system according to one of the preceding claims, wherein the housing (1) has a magnet (1.4) and the base (2) is produced at least partially from a magnetic material.

8. Probe system according to one of the preceding claims, wherein the base (2) has a magnet (1.4) and the housing (1) is produced at least partially from a magnetic material.

9. Probe system according to one of the preceding claims, wherein the housing (1) has a first means (1.3) for mechanical coding, which is configured as a cutout, and the base (2) has a second means (2.3) for mechanical coding, which is configured as a screw, such that the housing (1) and the base (2) are able to be assembled only in a defined relative position with respect to one another.

## Revendications

1. Système de palpage, comprenant un boîtier (1) doté d'une tige de palpage (3) et d'un socle (2), dans lequel
le boîtier (1) présente une première surface de positionnement (1.1), et le socle (2) présente une deuxième surface de positionnement (2.1), et
le boîtier (1) et/ou le socle (2) présente(nt) un aimant (1.4) de façon à créer un champ magnétique,
la tige de palpage (3) étant montée de manière à pouvoir dévier par rapport au boîtier (1), une unité de capteur pouvant déclencher un signal électrique en cas de déviation de la tige de palpage (3), et le socle (2) pouvant être fixé sur une table d'une machine-outil, et le boîtier (1) avec la tige de palpage (3) pouvant être placé sur le socle (2), dans lequel
le système de palpage est réalisé de telle sorte que la première surface de positionnement (1.1) peut être disposée à l'opposé de la deuxième surface de positionnement (2.1) de manière décalée dans une première direction (z), le boîtier (1) et le socle (2)
étant dans cette disposition maintenus ensemble par les forces générées par le champ magnétigue, dans lequel, soit
- sur la premiers surface de positionnement (1.1), trois corps coniques (2.2) sont disposés dont les axes (C) sont orientés en parallèle dans la première direction (z), et
- sur la deuxième surface de positionnement (2.1), six corps cylindriques (1.2) sont disposés dont les axes (B) sont orientés de manière orthogonale à la première direction (z),
soit
- sur la deuxième surface de positionnement (2.1), trois corps conques (2.2) sont disposés dont les axes (C) sont orientés en parallèle dans la première direction (z), et
- sur la première surface de positionnement (1.1), six corps cylindriques (1.2) sont disposés dont les axes (B) sont orientés de manière orthogonale à la première direction (z),
les corps cylindriques (1.2) pouvant être mis en contact avec les corps coniques (2.2) de telle sorte que la première et la deuxième surface de positionnement (1.1, 2.1) peuvent être assemblées de manière précise et reproductible l'une par rapport à l'autre, et le système de palpage étant configuré de telle sorte qu'une fois la mesure effectuée, le boîtier (1) muni de la tige de palpage (3) peut être retiré d'un espace d'usinage de la machine-outil alors que le socle (2) peut rester sur la table de la machine-outil, et ultérieurement le boîtier (1) avec la tige de palpage (3) peut être à nouveau placé sur le socle avec précision.

2. Système de palpage selon l'une quelconque des revendications 1 ou 2, dans lequel les corps cylindriques (1.2) sont configurés sous forme de tiges.

3. Système de palpage selon la revendication 2, dans lequel les corps cylindriques (1.2) sont fixés soit dans des perçages du boîtier (1), soit dans des perçages du socle (2).

4. Système de palpage selon l'une quelconque des cations précédentes, dans lequel les corps cylindriques (1.2) sont disposés par paires en parallèle les uns aux autres.

5. Système de palpage selon l'une quelconque des revendications précédentes, dans lequel les corps coniques (2.2) sont configurés en forme de cônes tronqués.

6. Système de palpage selon l'une quelconque des revendications précédentes, dans lequel les corps coniques (2.2) sont fixés dans des perçages du boîtier (1) ou dans des perçages (2.11) du socle (2).

7. Système de palpage selon l'une quelconque des revendications précédentes, dans lequel le boîtier (1) présente un aimant (1.4), et le socle (2) est fabriqué au moins en partie en un matériau magnétique.

8. Système de palpage selon l'une quelconque des revendications précédentes, dans lequel le socle (2) présente un aimant (1.4), et le boîtier (1) est fabriqué au moins en partie en un matériau magnétique.

9. Système de palpage selon l'une quelconque des revendications précédentes, dans lequel le boîtier (1) présente un premier moyen (1.3) pour le codage mécanique qui est configuré sous forme d'évidement, et le socle (2) présente un deuxième moyen (2.3) pour le codage mécanique qui est configuré sous forme de vis de sorte que le boîtier (1) et le socle (2) ne peuvent être assemblés que dans une position relative définie.
